# EUROPÄISCHE PATENTSCHRIFT

(11) **EP 4 108 432 B1**
(45) Veröffentlichungstag und Bekanntmachung des Hinweises auf die Patenterteilung: **16.08.2023**
(21) Anmeldenummer: 22000159.8
(22) Anmeldetag: 15.06.2022
(51) Int. Cl.: B29C 73/02

(54) **GLASREPARATURVORRICHTUNG UND REPARATURVERFAHREN**
GLASS REPAIR DEVICE AND REPAIR METHOD
DISPOSITIF DE RÉPARATION DE VERRE ET PROCÉDÉ DE RÉPARATION

(30) Priorität: 22.06.2021 DE 102021116164
(43) Veröffentlichungstag der Anmeldung: 28.12.2022
(73) Patentinhaber: PMA/TOOLS AG, 47877 Willich (DE)
(72) Erfinder: Bergen, Christopher, 57334 Bad Laasphe (DE); Zygmanowski, Alexander, 59423 Unna (DE)

(56) Entgegenhaltungen:
- EP-A1- 1 645 381
- WO-A1-2019/100141
- DE-A1- 10 336 578
- US-A- 3 562 366
- US-B1- 6 656 541

## Beschreibung

Die vorliegende Erfindung befasst sich mit einer Vorrichtung zur Reparatur einer Schadstelle einer Glasscheibe. Ebenso ist ein Reparaturverfahren Teil der Erfindung. Schadstellen einer Glasscheibe, insbesondere einer Verbundglasscheibe eines Kraftfahrzeugs, können etwa aus einem Steinschlag resultieren. Im Stand der Technik ist es bekannt, die Schadstelle mit einem Reparaturmedium, beispielweise mit einem aushärtbaren Reparaturharz, zu befüllen. Hierzu sind unterschiedliche Vorrichtungen bekannt.

In der Schrift WO 97/39879 A1 ist eine Reparaturvorrichtung mit einer Injektoreinheit zur Befüllung einer Schadstelle eines Verbundglases mit einer Reparaturflüssigkeit offenbart.

Die Schrift WO 2019/100141 A1 offenbart eine Vorrichtung gemäß dem Oberbegriff des Anspruchs 1 und ein Verfahren gemäß dem Oberbegriff des Anspruchs 14.

Die Aufgabe der vorliegenden Erfindung besteht darin, eine Vorrichtung und ein Verfahren bereitzustellen, mit welchen die Reparatur einer Schadstelle einer Glasscheibe erleichtert oder verbessert wird.

Diese Aufgabe wird durch eine Vorrichtung gemäß Anspruch 1 und durch ein Verfahren gemäß Anspruch 14 gelöst. Die Unteransprüche enthalten weitere bevorzugte Ausführungsformen.

Die erfindungsgemäße Vorrichtung umfasst einen Befestigungsabschnitt zur lösbaren Befestigung der Vorrichtung an einer Hauptfläche der Glasscheibe, einen Reparaturabschnitt zur Reparatur der Glasscheibe, eine Anregungsvorrichtung zur Erzeugung und Einkopplung einer periodischen mechanischen Anregung in die Glasscheibe sowie eine Steuereinrichtung zur Steuerung der Anregung.

Bei der Glasscheibe kann es sich um eine einfache Glasscheibe oder um eine Verbundglasscheibe handeln. Die Glasscheibe umfasst zwei Hauptflächen sowie Kantenflächen, welche die Hauptflächen miteinander verbinden.

Wenn es sich bei der Glasscheibe beispielsweise um eine Windschutzscheibe eines Kraftfahrzeugs handelt, ist im eingebauten Zustand der Windschutzscheibe eine Hauptfläche dem Fahrzeuginnenraum und die andere Hauptfläche der Fahrzeugaußenseite zugewandt. Der Reparaturbereich umfasst die Schadstelle der Glasscheibe und den die Schadstelle umgebenden Bereich der betreffenden Hauptfläche der Glasscheibe.

Der Befestigungsabschnitt kann ein oder mehrere Befestigungsmittel umfassen, bei denen es sich beispielsweise um eine elastische Dichtfläche, einen Saugnapf oder ein Magnetelement handeln kann.

Der Reparaturabschnitt wird über dem Reparaturbereich der Glasscheibe angeordnet und umfasst und/oder trägt Mittel zur Reparatur der Schadstelle, auf welche weiter unten eingegangen wird.

Die Anregungsvorrichtung umfasst Mittel zur Erzeugung und Einkopplung der periodischen mechanischen Anregung in die Glasscheibe. Die Anregung kann beispielsweise mit einem Motor mit Unwucht erzeugt werden, wobei, bei einteiligem Aufbau der Vorrichtung und im einfachsten Fall, der an der Scheibe angeordnete Befestigungsabschnitt als Einkopplungselement wirken kann. Zusätzlich oder alternativ kann die Einkopplung über ein separates Einkopplungselement erfolgen. Die Anregung kann auch mit einem Funktionsgenerator erzeugt werden. In diesem Fall kann als Einkopplungselement ein Aktor, beispielsweise in Form eines an der Scheibe angeordneten Piezoelements oder Körperschallwandlers oder eines an oder in der Nähe der Scheibe angeordneten Lautsprechers, vorgesehen werden. Die Anregung kann dabei jeweils kontinuierlich oder gepulst erfolgen.

Die Bezeichnung "periodisch" soll im Rahmen dieser Anmeldung im weitesten Sinne verstanden werden. So kann die Anregung eine Periodizität im streng mathematischen Sinne aufweisen, dies muss aber nicht der Fall sein. Als periodisch soll vielmehr auch gelten, wenn die Anregung mindestens einen oszillierenden Anteil umfasst, ohne dass dabei eine Periodizität im mathematischen Sinne vorliegt.

Die Anregungsvorrichtung kann in die Vorrichtung integriert oder mit dieser fest verbunden sein, sie kann aber auch ganz oder teilweise als separates Anregungsmodul ausgeführt und mit der übrigen Vorrichtung nur hinsichtlich der Steuerung, optional auch hinsichtlich der Energieversorgung, verbunden sein.

Eine integrierte Ausführung bietet den Vorteil einfacherer Handhabung. Eine getrennte Ausführung bietet demgegenüber den Vorteil, dass das Anregungsmodul unabhängig von der übrigen Vorrichtung an der Scheibe platziert werden kann, was im Hinblick auf die Effizienz der Einkopplung vorteilhaft sein kann.

Die Anregung unterstützt den Reparaturprozess und das Reparaturergebnis, indem die Schadstelle durch die in der Glasscheibe angeregte Schwingung besser mit dem Reparaturmedium gefüllt wird und indem etwa in dem Reparaturmedium vorhandene Gasbläschen reduziert oder eliminiert werden. Dadurch wird die optische Qualität der reparierten Schadstelle verbessert.

Die Steuereinrichtung kann dazu eingerichtet sein, mindestens einen Anregungsparameter zu steuern, beispielsweise eine Frequenz, ein Frequenzspektrum, eine Amplitude, eine Intensität, einen Startzeitpunkt oder eine Dauer der Anregung. Es versteht sich, dass dies auch die Steuerung mehrerer oder aller genannten Anregungsparameter einschließt. So kann die Steuereinrichtung beispielsweise die Frequenz, den Startzeitpunkt und die Dauer der Anregung steuern.

Die Steuereinrichtung kann insbesondere dazu eingerichtet sein, den mindestens einen Anregungsparameter der eingekoppelten Anregung innerhalb eines vorgebbaren Anregungsparameterbereichs zu variieren. Beispielsweise kann die Steuereinrichtung während der Anregung die Anregungsfrequenz innerhalb eines vorgebbaren Frequenzbereiches und/oder die Anregungsintensität innerhalb eines vorgebbaren Intensitätsbereichs variieren. Der Frequenzbereich hängt insbesondere von den Eigenschaften der Glasscheibe ab und bestimmt die Auswahl einer geeigneten Anregungsvorrichtung. Beispielhaft kann der Frequenzbereich Frequenzen von 20 Hz bis 1500 Hz umfassen. Schwingungen in diesem Frequenzbereich können auf einfache Weise mit einem Motor mit Unwucht erzeugt werden. Die Erfindung ist jedoch nicht auf diesen Frequenzbereich oder diese Anregungsquelle beschränkt, sondern schließt grundsätzlich auch andere Frequenzen mit ein, beispielsweise im kHz-Bereich oder im unteren MHz-Bereich.

Die Steuerung des mindestens einen Anregungsparameters kann bevorzugt automatisch und/oder programmgesteuert erfolgen. Auf diese Weise kann die Vorrichtung Reparaturprogramme ausführen, die zuvor etwa anhand von Erfahrungswerten erstellt und für bestimmte Anwendungsfälle optimiert sein können. Die Reparaturprogramme können beispielsweise auf Eigenschaften von Glasscheiben (Dicke, Aufbau, Größe, Lokalisation der Schadstelle, etc.) und/oder auf Eigenschaften des verwendeten Reparaturmediums (Viskosität, Aushärtezeit, etc.) abgestimmt sind.

In einer bevorzugten Ausführungsform kann die Vorrichtung eine erste Sensoreinrichtung zur Ermittlung mindestens eines Antwortparameters einer durch die Anregung in der Glasscheibe, insbesondere im Reparaturbereich, bewirkten Schwingung umfassen. Bei dem mindestens einen Antwortparameter kann es sich um eine Frequenz, ein Frequenzspektrum, eine Amplitude, eine Intensität oder eine auf eine Phase der Anregung bezogene Phasenverschiebung der in der Glasscheibe angeregten Schwingung handeln.

Die erste Sensoreinrichtung steht mit der Steuereinrichtung in Datenverbindung.

Die Datenverbindung dient der Übermittlung der von der ersten Sensoreinrichtung ermittelten Messwerte an die Steuereinrichtung und kann kabellos oder kabelgebunden sein, wobei die Messwerte jeweils analog oder digital übermittelt werden können. Die erste Sensoreinrichtung kann in die Vorrichtung integriert oder mit dieser fest verbunden sein, sie kann aber auch als separates Sensormodul ausgeführt und mit der Vorrichtung nur über die Datenverbindung verbunden sein. Bei Ausführung als separates Sensormodul lässt sich die Sensoreinrichtung flexibel auf der Glasscheibe platzieren.

In Verbindung mit der vorstehend erläuterten Variation mindestens eines Anregungsparameters kann mit Hilfe der ersten Sensoreinrichtung somit in Abhängigkeit von einem Anregungsparameter oder mehreren Anregungsparametern festgestellt werden, ob und in welchem Maße jeweils eine Schwingung in die Glasscheibe eingekoppelt wird. Dies gibt dem Bediener die Möglichkeit, einen oder mehrere Anregungsparameter und/oder Anregungsparameterbereiche derart zu wählen, dass möglichst günstige Voraussetzungen für eine erfolgreiche Reparatur geschaffen werden. Beispielsweise kann die Anregungsfrequenz so gewählt werden, dass sie im Wesentlichen einer Resonanzfrequenz der Glasscheibe entspricht.

Die Steuereinrichtung kann auch dazu eingerichtet sein, die Anregung selbsttätig in Abhängigkeit von dem durch die erste Sensoreinrichtung ermittelten mindestens einen Antwortparameter zu steuern, insbesondere derart, dass der Antwortparameter einen in der Steuereinrichtung vorgebbaren Vorgabewert erreicht oder unterschreitet oder überschreitet. Beispielsweise kann eine Resonanzfrequenz der Scheibe aufgesucht werden, indem die erste Sensoreinrichtung als Antwortparameter die auf die Phase der Anregung bezogene Phasenverschiebung der Schwingung der Glasscheibe ermittelt, wobei die Anregungsfrequenz so lange variiert wird, bis die Phasenverschiebung etwa einen Vorgabewert von -π/2 erreicht, der das Vorliegen einer Resonanz anzeigt (die Phase der Schwingung der Glasscheibe eilt der Phase der Anregung um π/2 nach). Alternativ oder zusätzlich kann beispielsweise als Antwortparameter die Amplitude der Schwingung der Glasscheibe ermittelt werden. Die Steuereinrichtung kann dann beispielsweise die Anregungsfrequenz und/oder die Anregungsintensität derart steuern, dass ein Vorgabewert für die Amplitude der in der Glasscheibe angeregten Schwingung erreicht oder überschritten wird (zur Erreichung eines guten Reparaturergebnisses) und/oder nicht überschritten wird (etwa zur Vermeidung einer weiteren Schädigung der Scheibe).

Die Anregung kann auch derart gesteuert werden, dass der mindestens eine Antwortparameter einen bezogen auf den Anregungsparameterbereich maximalen oder minimalen Wert annimmt. Dazu wird beispielsweise die Anregungsfrequenz (als Anregungsparameter) zunächst innerhalb eines wählbaren Frequenzbereichs (als Anregungsparameterbereich) variiert, während die erste Sensoreinrichtung zugleich die Amplitude oder die Intensität (als Antwortparameter) der Schwingung der Glasscheibe ermittelt und an die Steuereinrichtung übermittelt. Wertepaare aus Anregungsfrequenz und zugehöriger Amplitude oder Intensität der Schwingung der Glasscheibe können in der Steuereinrichtung zumindest vorübergehend beispielsweise als Tabelle abgelegt werden. Während der Dosierung des Reparaturmediums auf die Schadstelle und/oder während des Aushärtens des Reparaturmediums kann die Anregung dann bei derjenigen Frequenz erfolgen, bei welcher die Amplitude der Schwingung der Glasscheibe einen bezogen auf den zuvor untersuchten Frequenzbereich maximalen Wert annimmt. Hiermit kann erreicht werden, dass die Anregung derart erfolgt, dass die dadurch in der Glasscheibe bewirkte Schwingung möglichst intensiv ist. Dies ist insbesondere dann der Fall, wenn die Anregung mit einer Resonanzfrequenz der Glasscheibe erfolgt. Eine intensive Schwingung bewirkt ein möglichst gutes Eindringen des Reparaturmediums in die Schadstelle und/oder eine möglichst weitgehende Entfernung von Bläschen aus dem Reparaturmedium und führt damit insgesamt zu einem möglichst guten Reparaturergebnis.

Die durch die Steuereinrichtung oder durch mit der Steuereinrichtung verbundene Komponenten der Vorrichtung oder durch externe Geräte einstellbaren Werte, etwa der "Vorgabewert", der "minimale Wert" und der "maximale Wert", beinhalten eine Schwankungsbreite von +/- 20%.

In einer Ausführungsform ist der Reparaturabschnitt der erfindungsgemäßen Vorrichtung relativ zu dem Befestigungsabschnitt um eine zu der Hauptfläche der Glasscheibe im Wesentlichen normalen Drehachse drehbar und bezüglich seiner Drehstellung vorzugsweise arretierbar. Dadurch kann der Reparaturabschnitt nach Fixieren des Befestigungsabschnitts an der Scheibe auf einer kreisförmigen Bahn um den Befestigungsabschnitt bewegt werden, um die Schadstelle zu lokalisieren und zu reparieren.

Die erfindungsgemäße Vorrichtung kann eine Injektoreinheit zur Abgabe eines Reparaturmediums auf die Schadstelle umfassen. An einem der Schadstelle zugewandten ersten Ende weist die Injektoreinheit dazu eine Abgabeöffnung und bevorzugt eine beispielsweise als O-Ring ausgebildete und umlaufend um die Abgabeöffnung herum angeordnete Dichtung auf. Wenn die Injektoreinheit mit der Dichtung an dem Reparaturbereich angeordnet ist, begrenzen die Dichtung, das erste Ende der Injektoreinheit und der innerhalb der Dichtung liegende und die Schadstelle umfassende Teil des Reparaturbereichs gemeinsam einen Reparaturraum.

Die Injektoreinheit kann fluidleitend mit einem das Reparaturmedium enthaltenden Behälter verbunden sein oder selbst einen Aufnahmeraum umfassen, in welchem eine zumindest für eine Reparatur einer Schadstelle ausreichende Menge des Reparaturmediums vorgehalten werden kann. Der Aufnahmeraum kann als zylinderförmige Bohrung ausgeführt sein, in welcher ein beweglicher Stempel oder Kolben angeordnet ist, mit dem das Reparaturmedium durch die Abgabeöffnung gefördert werden kann.

Die Injektoreinheit kann ein Vakuummittel zur Beaufschlagung des Reparaturraums mit einem Unterdruck umfassen. Dabei kann es sich um einen Anschluss für eine Vakuumpumpe handeln. Das Vakuummittel kann jedoch auch durch den Stempel oder Kolben gebildet sein. Vor oder nach dem Befüllen der Schadstelle mit dem Reparaturmedium kann durch Beaufschlagen des Reparaturraums mit einem Unterdruck das Eindringen des Reparaturmediums in die Schadstelle und/oder die Entfernung von Luftblasen aus dem Reparaturmedium verbessert werden.

Bei dem Reparaturmedium kann es sich bevorzugt um eine Flüssigkeit, besonders bevorzugt um ein Harz, handeln.

Die erfindungsgemäße Vorrichtung kann eine Schadstellenortungseinrichtung umfassen. Hierbei kann es sich beispielsweise um eine Optik, einen optischen Sensor, eine Kamera, einen Laser oder ein mechanisches Tastelement, etwa eine Nadel, handeln. Die Schadstellenortungseinrichtung dient dem Auffinden der Schadstelle der Glasscheibe und einer für die Reparatur optimalen Positionierung und Orientierung der Vorrichtung auf der Glasscheibe.

Der Reparaturabschnitt der Vorrichtung kann eine erste Aufnahmevorrichtung zur Aufnahme der Injektoreinheit umfassen, welche bevorzugt derart an dem Reparaturabschnitt angeordnet ist, dass ihre Ausrichtung relativ zu der Hauptfläche der Glasscheibe einstellbar und bevorzugt arretierbar ist, beispielsweise mittels eines Kugelgelenks. Weiterhin bevorzugt umfasst der Reparaturabschnitt auch eine zweite Aufnahmevorrichtung zur Aufnahme der Schadstellenortungseinrichtung, wobei die zweite Aufnahmevorrichtung durch die erste Aufnahmevorrichtung gebildet sein kann.

Die Aufnahmevorrichtungen können Mittel zur Fixierung der Injektoreinheit und/oder der Schadstellenortungseinrichtung, etwa einen Schnappverschluss oder bevorzugt ein Schraubgewinde, umfassen.

In einer weiteren Ausführungsform ist ein radialer Abstand zwischen der ersten Aufnahmevorrichtung und der Drehachse einstellbar und vorzugsweise arretierbar. In Verbindung mit der vorstehend erläuterten Drehbarkeit des Reparaturabschnitts um den Befestigungsabschnitt kann die Schadstellenortungseinrichtung und/oder die Injektoreinheit in einem kreisscheibenförmigen Bereich der Scheibenoberfläche um die Drehachse herum justiert werden. Das bietet die Möglichkeit, die Vorrichtung mit ihrem Befestigungsabschnitt zunächst nur grob in Bezug auf die Schadstelle auf der Glasscheibe zu positionieren und die Feinjustage zur Ortung und anschließenden Reparatur der Schadstelle anschließend durch Wahl der Drehstellung und Einstellung des radialen Abstands vorzunehmen.

In einer weiteren Ausführungsform umfasst die Anregungsvorrichtung ein Einkopplungselement zur Einkopplung der periodischen mechanischen Anregung in die Glasscheibe. Wenn die Anregung mit einem Motor mit Unwucht erzeugt wird, kann es sich bei dem Einkopplungselement um ein Bauteil handeln, welches mechanisch sowohl mit dem Motor wie auch mit der Glasscheibe gekoppelt ist, etwa indem es an der Glasscheibe anliegt und die vom Motor erzeugte Schwingung auf die Scheibe überträgt. Das Einkopplungselement kann von der Schadstellenortungseinrichtung (in Form eines mechanischen Tasters) und/oder von der Injektoreinheit gebildet sein, wodurch auf weitere Bauteile verzichtet werden kann.

In einer weiteren Ausführungsform umfasst die erfindungsgemäße Vorrichtung eine Kommunikationseinheit mit Mitteln zur Ein- und/oder Ausgabe von Daten und/oder Informationen. Beispielhafte Mittel zur Eingabe und Ausgabe von Daten sind eine Folientastatur, ein Touchscreen, ein Touchpad, ein USB-Anschluss, eine Signaleinrichtung und eine kabellose oder kabelgebundene Datenverbindung zu einem externen Gerät, auf welchem sich ein Teil der Kommunikationseinheit oder ein Teil ihrer Funktionen befinden kann. Die Signaleinrichtung dient der Ausgabe optischer und/oder akustischer Signale oder Hinweise. Die Kommunikationseinheit kann mit der Steuereinrichtung mittels Datenverbindung verbunden sein.

Die erfindungsgemäße Vorrichtung kann eine vorzugsweise an dem Reparaturabschnitt, insbesondere an der ersten Aufnahmevorrichtung, angeordnete Strahlungsquelle zur Aushärtung des Reparaturmediums umfassen. Die Strahlungsquelle kann ein oder mehrere lichtemittierende Elemente umfassen und emittiert bevorzugt Licht mit einer Wellenlänge oder in einem Wellenlängenbereich, die oder der eine Aushärtung des Reparaturmediums bewirkt oder beschleunigt. Bevorzugt wird Licht im UV-Bereich verwendet. Zusätzlich kann auch eine weitere Strahlungsquelle zur Beleuchtung des Reparaturbereichs vorhanden sein.

Die erfindungsgemäße Vorrichtung kann über eine interne Stromquelle, etwa eine Batterie, einen Akku und/oder über eine externe Stromversorgung, beispielsweise mittels eines USB-Anschlusses, verfügen. Sie kann Mittel zur Messung der Umgebungstemperatur und/oder zur Messung der umgebenden relativen Luftfeuchte umfassen.

In einer weiteren Ausführungsform kann die erfindungsgemäße Vorrichtung eine zweite Sensoreinrichtung umfassen, die mit der Steuereinrichtung in Datenverbindung steht und der Ermittlung einer Andruckkraft dient, mit welcher die Injektoreinheit auf den Reparaturbereich gedrückt wird. Die zweite Sensoreinrichtung kann einen Kraftaufnehmer beliebiger Bauart umfassen, der beispielsweise an dem Reparaturabschnitt, insbesondere an der ersten oder zweiten Aufnahmevorrichtung oder an der Injektoreinheit angeordnet sein kann. Die zweite Sensoreinrichtung kann auch einen Dehnungssensor beliebiger Bauart umfassen, beispielsweise einen aufgeklebten Dehnungsmesstreifen, welcher an einem insbesondere an dem Reparaturabschnitt oder zwischen dem Befestigungsbereich und dem Reparaturabschnitt vorgesehenen Verformungsbereich angeordnet ist. Als Verformungsbereich kommt jeder Bereich der Struktur der Vorrichtung in Frage, welcher eine mit der zweiten Sensoreinrichtung messbare Dehnung oder Stauchung erfährt, wenn die Injektoreinheit mit einer Andruckkraft auf die Glasscheibe gedrückt wird.

Bei geeigneter Kalibrierung der zweiten Sensoreinrichtung und gegebenenfalls der Vorrichtung kann die Andruckkraft als Absolutwert ermittelt werden. Für praktische Zwecke ist in vielen Fällen eine Relativmessung ausreichend. Dazu kann ein erster Wert der Andruckkraft als Referenz- oder Nullwert ermittelt werden, wenn die Injektoreinheit im Zuge der Justage den Reparaturbereich gerade eben berührt. Weitere Werte der Andruckkraft werden dann auf diesen Referenz- oder Nullwert bezogen.

Die Kommunikationseinheit kann mittels der Signaleinrichtung ein Signal ausgeben, wenn die insbesondere während einer Justage der Injektoreinheit gemessene Andruckkraft einen festlegbaren Sollwert überschreitet und/oder unterschreitet und/oder innerhalb und/oder außerhalb eines festlegbaren Sollwertbereichs liegt. Hierdurch kann ein Benutzer eine Rückmeldung erhalten, ob die Injektoreinheit mit einer zu geringen, einer geeigneten oder einer zu hohen Kraft gegen die Schadstelle der Glasscheibe gedrückt wird. Eine zu geringe Andruckkraft kann dazu führen, dass das Reparaturmedium bei der Abgabe auf die Schadstelle aus dem Reparaturraum austritt. Eine zu geringe Andruckkraft kann auch dazu führen, dass der Reparaturraum, und damit die Schadstelle, nicht mit einem Druck oder Unterdruck beaufschlagt werden kann. Eine zu hohe Andruckkraft kann dagegen zum Lösen des Befestigungsmittels von der Glasscheibe und zu Harzaustritt oder im ungünstigsten Fall sogar zu einer weiteren Beschädigung der Glasscheibe führen.

Die Erfindung umfasst auch ein Verfahren zur Reparatur einer Schadstelle einer Glasscheibe mittels einer Reparaturvorrichtung, insbesondere der vorstehend beschriebenen erfindungsgemäßen Vorrichtung.

Die Aspekte des erfindungsgemäßen Verfahrens werden in der nachfolgenden Beschreibung auch als "Schritte" bezeichnet, die zur leichteren Bezugnahme alphabetisch gekennzeichnet sind. Dies soll jedoch ausdrücklich keine bestimmte Reihenfolge der Schritte implizieren. Jeder einzelne der nachfolgend erläuterten Verfahrensschritte kann vielmehr, soweit technisch möglich und sinnvoll, vor und/oder während und/oder gleichzeitig mit und/oder nach einem anderen Verfahrensschritt erfolgen.

Die Verfahrensschritte können also, soweit technisch möglich und sinnvoll, in beliebiger Reihenfolge und sowohl nacheinander als auch ganz oder teilweise parallel erfolgen.

Das erfindungsgemäße Verfahren zur Reparatur einer Schadstelle einer Glasscheibe umfasst dabei zumindest die Verfahrensschritte
(a) Bereitstellung einer Reparaturvorrichtung, insbesondere einer erfindungsgemäßen Vorrichtung,
(b) Anordnung der Reparaturvorrichtung an der Glasscheibe,
(c) Dosierung eines Reparaturmediums auf die Schadstelle,
(d) Aushärtung des Reparaturmediums, insbesondere unter Bestrahlung mittels einer Strahlungsquelle,
(e) Einkopplung einer periodischen mechanischen Anregung in die Glasscheibe,
(f) Steuerung der Anregung derart, dass eine Variation mindestens eines Anregungsparameters der Anregung innerhalb eines Anregungsparameterbereichs erfolgt. Bei dem mindestens einen Anregungsparameter kann es sich um einen der vorstehend in Bezug auf die Steuereinrichtung der Vorrichtung aufgeführten Anregungsparameter handeln.

Die Einkopplung der Anregung gemäß Schritt (e) kann dabei insbesondere vor und/oder zumindest zeitweise während der Verfahrensschritte (c) und/oder (d) erfolgen. Ebenso kann die Steuerung der Anregung gemäß Schritt (f) insbesondere vor und/oder zumindest zeitweise während der Verfahrensschritte (c) und/oder (d) erfolgen. Insbesondere vor und/oder während Schritt (c) und/oder vor und/oder während Schritt (d) kann die Schadstelle zusätzlich mit einem Unterdruck beaufschlagt werden.

Beispielweise kann während der Dosierung des Reparaturmediums auf die Schadstelle gemäß Schritt (c) die periodische mechanische Anregung gemäß Schritt (e) in die Glasscheibe eingekoppelt werden. Dabei kann beispielsweise die Anregungsfrequenz (als Anregungsparameter) innerhalb eines Anregungsfrequenzbereichs (als Anregungsparameterbereich) gemäß Schritt (f) variiert werden. Die Einkopplung der Anregung gemäß Schritt (e) kann auch zumindest teilweise während des Aushärtens des Reparaturmediums gemäß Schritt (d) weiter erfolgen, wobei die Variation der Anregungsfrequenz gemäß Schritt (f) fortgesetzt werden oder auch entfallen kann.

In einer weiteren Ausführungsform umfasst das Verfahren zusätzlich die Schritte (g) Ermittlung mindestens eines Antwortparameters einer durch die Anregung in der Glasscheibe, insbesondere in dem Reparaturbereich, bewirkten Schwingung, sowie (h) Steuerung der Anregung insbesondere derart, dass die Anregung während Schritt (c) und/oder Schritt (d) zumindest zeitweise, bevorzugt überwiegend, im Wesentlichen mit einem Arbeitswert des mindestens einen Anregungsparameters erfolgt, bei welchem der mindestens eine Antwortparameter einen Vorgabewert erreicht oder überschreitet oder unterschreitet oder einen bezogen auf den Anregungsparameterbereich maximalen oder minimalen Wert annimmt.

Bei dem mindestens einen Antwortparameter in Schritt (g) kann es sich um die vorstehend unter Bezug auf die erste Sensoreinrichtung der Vorrichtung genannten Antwortparameter handeln, insbesondere um eine Amplitude oder eine Intensität.

Die Ermittlung des Antwortparameters gemäß Schritt (g) kann insbesondere während der Einkopplung der Anregung gemäß Schritt (e) und damit vor und/oder zumindest zeitweise während der Verfahrensschritte (c) und/oder (d) erfolgen und gestattet eine Überprüfung, ob und in welchem Maße eine Schwingung in die Glasscheibe eingekoppelt wird. Wenn die Ermittlung des Antwortparameters gemäß Schritt (g) während der Variation eines Anregungsparameters gemäß Schritt (f) erfolgt, kann die Anregung gemäß Schritt (h) derart gesteuert werden, dass möglichst günstige Voraussetzungen für eine erfolgreiche Reparatur geschaffen werden. Zur Vermeidung von Wiederholungen wird Bezug genommen auf die vorstehende Beschreibung der erfindungsgemäßen Vorrichtung.

In einer weiteren Ausführungsform umfasst das Verfahren die Schritte
(i) Ermittlung einer Andruckkraft, mit welcher eine Injektoreinheit der Vorrichtung an die Glasscheibe angedrückt wird,
(j) Vergleich der Andruckkraft mit einem Sollwert oder einem Sollwertbereich,
(k) Ausgabe eines Signals und/oder Unterbrechung oder Abbruch des Verfahrens, wenn die Andruckkraft den Sollwert unterschreitet oder überschreitet oder wenn die Andruckkraft innerhalb oder außerhalb des Sollwertbereichs liegt.

Die Schritte (i) bis (k) können beispielsweise vor und/oder zumindest zeitweise während der Verfahrensschritte (b) und/oder (c) und/oder (d) durchgeführt werden. Die Ermittlung der Andruckkraft gemäß Schritt (i) erfolgt vorzugsweise zumindest bereits während der vorstehend unter Bezug auf die Vorrichtung beschriebenen Ausrichtung und Justage der Injektoreinheit an dem Reparaturbereich der Glasscheibe. Die Ermittlung der Andruckkraft kann als Absolutwert oder in Bezug auf einen Referenz- oder Nullwert ermittelt werden, etwa wie vorstehend unter Bezug auf die Vorrichtung erläutert.

Durch die Schritte (i) bis (k) kann die Injektoreinheit mit einer günstigen Andruckkraft an dem Reparaturbereich der Glasscheibe angeordnet werden, so dass sich die vorstehend unter Bezug auf die zweite Sensoreinrichtung der erfindungsgemäßen Vorrichtung erläuterten Vorteile erzielen lassen.

Das erfindungsgemäße Verfahren kann weiterhin als Schritt
(l) die Einstellung mindestens eines Betriebsparameters der Reparaturvorrichtung umfassen, ausgewählt aus einer Gruppe umfassend
- Zeitpunkt oder Zeitpunkte für das Ein- und/oder Ausschalten der Anregungsvorrichtung,
- Grenzen des Anregungsparameterbereichs des mindestens einen Anregungsparameters,
- zeitliches Verhalten der Variation des mindestens einen Anregungsparameters,
- Vorgabewert des mindestens einen Antwortparameters,
- Sollwert oder Sollwertbereich der Andruckkraft der Injektoreinheit,
- Zeitpunkt oder Zeitpunkte für das Ein- und/oder Ausschalten der Strahlungsquelle, wobei die Einstellung bevorzugt mittels einer Steuereinrichtung und/oder mittels einer Kommunikationseinheit und/oder mittels eines mit der Vorrichtung in Datenverbindung stehenden externen Geräts erfolgt.

Je nach Betriebsparameter kann der Verfahrensschritt (l) vor, während oder nach jedem der zuvor genannten Verfahrensschritte (b) bis (k) erfolgen, soweit dies technisch sinnvoll und möglich ist. Hierdurch besteht die Möglichkeit, die technischen Merkmale der Vorrichtung umfänglich zu nutzen.

Ausgehend von dem zuvor genannten Verfahrensschritt (l) kann das erfindungsgemäße Verfahren auch einen oder beide der nachfolgenden Verfahrensschritte umfassen:
(m) Abruf eines in der Vorrichtung, insbesondere in der Steuereinrichtung und/oder der Kommunikationseinheit, und/oder in dem mit der Vorrichtung in Datenverbindung stehenden externen Gerät gespeicherten und den mindestens einen Betriebsparameter umfassenden Reparaturprogramms, insbesondere in Abhängigkeit von dem für die Reparatur vorgesehenen Reparaturmedium und/oder von der zu reparierenden Glasscheibe, und/oder
(n) Steuerung derart, dass zumindest die Schritte (e) und (f) automatisiert ablaufen.

Die Steuerung gemäß Schritt (n) kann bevorzugt auch den automatisierten Ablauf der Schritte (e), (f) und (g), weiter bevorzugt der Schritte (e) bis (h), umfassen. Insbesondere bevorzugt ist in Schritt (n) der automatisierte Ablauf der Schritte (e) bis (h) und der Schritte (i) bis (k).

Entsprechende Reparaturprogramme können zuvor etwa anhand von Erfahrungswerten erstellt und für bestimmte Anwendungsfälle optimiert werden. Die Reparaturprogramme können beispielsweise auf Eigenschaften von Glasscheiben (Dicke, Aufbau, Größe, Lokalisation der Schadstelle, etc.) und/oder auf Eigenschaften des verwendeten Reparaturmediums (Viskosität, Aushärtezeit, etc.) abgestimmt sein. Durch eine weitgehende Automatisierung kann die Anwenderfreundlichkeit verbessert werden, und ein komplexes Reparaturverfahren kann auch durch weniger geübte Bediener einfach und erfolgreich durchgeführt werden.

Weitere Merkmale und Vorteile der Erfindung sind Gegenstand der nachfolgenden Beschreibung und der zeichnerischen Darstellung bevorzugter, aber nicht begrenzender Ausführungsbeispiele.

Die Figuren zeigen
- Figur 1: eine erfindungsgemäße Vorrichtung in Draufsicht
- Figur 2: die Vorrichtung gemäß Figur 1 in einer Seitenansicht
- Figur 3: die Vorrichtung gemäß Figur 1 in einer Ansicht von unten
- Figur 4: die Vorrichtung gemäß Figur 1 in einer Teilansicht
- Figur 5: eine weitere erfindungsgemäße Vorrichtung

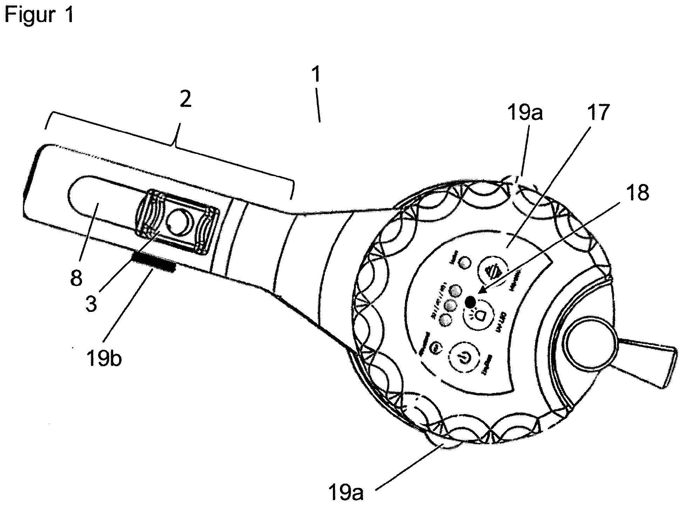

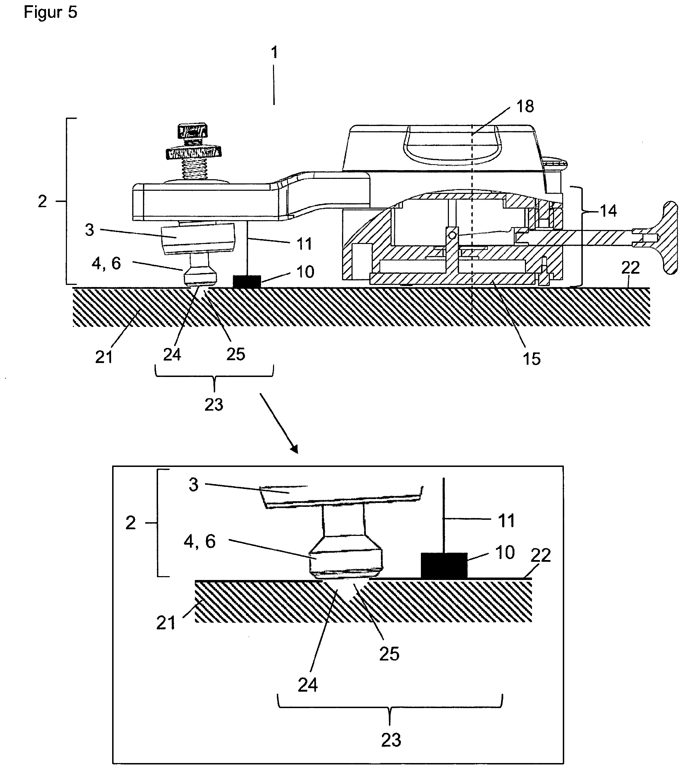

Eine in den Figuren 1 bis 4 dargestellte erfindungsgemäße Vorrichtung 1 umfasst einen Reparaturabschnitt 2 mit einer ersten Aufnahmevorrichtung 3 zur Aufnahme einer Injektoreinheit 4 (nicht dargestellt, vgl. jedoch Figur 5). Zur lösbaren Befestigung der Vorrichtung an einer Hauptfläche 22 einer Glasscheibe 21 (jeweils nicht dargestellt; vgl. jedoch Figur 5) ist ein Befestigungsabschnitt 14 mit einem als Saugnapf ausgebildeten Befestigungsmittel 15 vorgesehen.

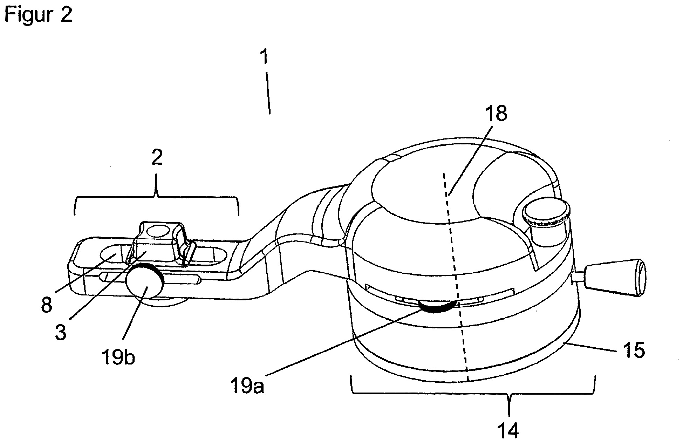

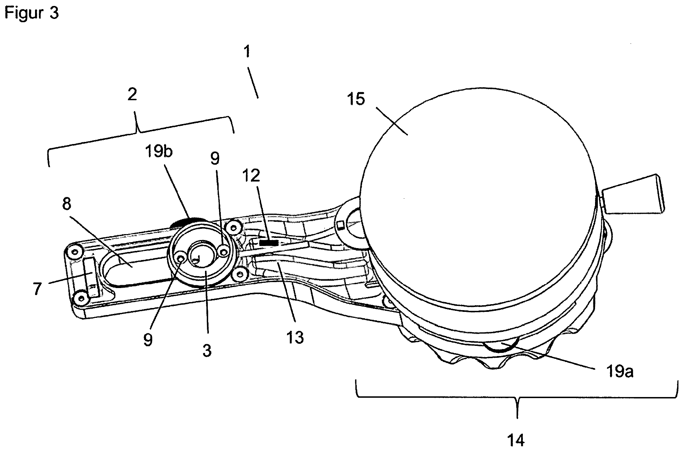

Nach Befestigung der Vorrichtung 1 an der Glasscheibe 21 ist der Reparaturabschnitt 2 um eine zu der Hauptfläche 22 der Glasscheibe 21 im Wesentlichen senkrechte Drehachse 18 drehbar, welche in der Aufsicht gemäß Figur 1 durch einen Punkt und in der perspektivischen Ansicht gemäß Figur 2 als gestrichelte Achse angedeutet ist. Der Reparaturabschnitt 2 ist bezüglich seiner Drehstellung durch erste Arretierungsmittel 19a in Form von Rändelschrauben arretierbar (vgl. Figuren 2 und 3). Die erste Aufnahmevorrichtung 3 ist in einem Langloch 8 radial in Bezug auf die Drehachse 18 verschiebbar aufgenommen und mit einem zweiten Arretierungsmittel 19b arretierbar. Die erste Aufnahmevorrichtung 3 kann somit in einem kreisscheibenförmigen und konzentrisch um die Drehachse 18 liegenden Bereich der Hauptfläche 22 der Glasscheibe 21 justiert werden.

Zur Ortung der Schadstelle 24 (vgl. Figur 5) kann eine (nicht dargestellte) Schadstellenortungseinrichtung, im einfachsten Fall ein mechanischer Taster etwa in Form einer Nadel, in der ersten Aufnahmevorrichtung 3 fixiert werden, mit deren Hilfe die Schadstelle unter Drehung des Reparaturabschnitts 2 um die Drehachse 18 und/oder unter radialer Verschiebung der ersten Aufnahmevorrichtung 3 lokalisiert werden kann. Nach Arretierung der Vorrichtung 1 in einer geeigneten Position und Orientierung kann die Schadstellenortungseinrichtung entfernt und eine Injektoreinheit 4 (vgl. Figur 5) in die erste Aufnahmevorrichtung 3 eingesetzt werden.

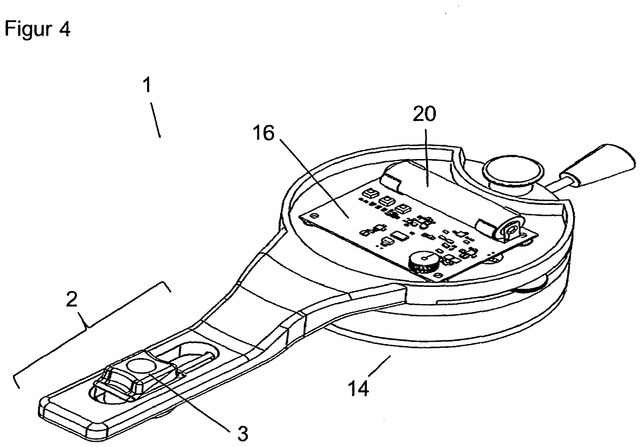

Die Vorrichtung 1 umfasst eine Steuereinrichtung 16 (vgl. Figur 4) und eine mit der Steuereinrichtung 16 verbundene Kommunikationseinheit 17 (vgl. Figur 1), die als Benutzerschnittstelle dient und die notwendigen Bedienelemente, Anzeigen und Signaleinrichtungen bereitstellt. Zur Energieversorgung ist ein Akku 20 vorgesehen (vgl. Figur 4).

An dem Reparaturabschnitt 2 ist als Teil einer Anregungsvorrichtung 5 ein Motor 7 mit Unwucht zur Erzeugung einer periodischen mechanischen Anregung vorgesehen (vgl. Figur 3). Die Einkopplung der Anregung erfolgt zum Teil über den Befestigungsabschnitt 14 und das Befestigungsmittel 15, vor allem jedoch durch die während der Reparatur in die erste Aufnahmevorrichtung 3 eingesetzte und unmittelbar auf dem Reparaturbereich 23 der Scheibe 21 aufliegende Injektoreinheit 4 (vgl. jeweils Figur 5), die als effektives Einkopplungselement 6 wirkt.

Die Vorrichtung 1 umfasst eine Strahlungsquelle 9 in Form von zwei UV-LEDs zur Aushärtung des Reparaturmediums. Zwischen dem Reparaturabschnitt 2 und dem Befestigungsabschnitt 14 ist eine in einem Verformungsbereich 13 angeordnete zweite Sensoreinrichtung 12 in Form eines Dehnungsmessstreifens angeordnet. Damit kann eine Verformung (etwa eine Dehnung oder eine Stauchung) des Verformungsbereichs 13 detektiert werden, wie sie beispielsweise erfolgt, wenn die in die erste Aufnahmevorrichtung 3 eingesetzte Injektoreinheit 4 mit einer Andruckkraft gegen die Glasscheibe 21 gepresst wird. Größere Andruckkräfte führen zu größeren Verformungen des Verformungsbereichs 13, so dass sich die Andruckkraft auf diesem Weg ermitteln lässt. Die zweite Sensoreinrichtung 12 steht mit der Steuereinrichtung 16 in Datenverbindung (nicht dargestellt).

Die Figur 5 zeigt eine weitere erfindungsgemäße Vorrichtung 1 in einer teilweise geschnittenen Seitenansicht. Die Vorrichtung 1 gemäß Figur 5 ist der vorstehend unter Bezug auf die Figuren 1 bis 4 beschriebenen Vorrichtung 1 weitgehend ähnlich. Gleiche oder funktionsgleiche Elemente tragen jeweils identische Bezugszeichen. Nachfolgend wird im Wesentlichen auf die Unterschiedsmerkmale der Figur 5 gegenüber den Figuren 1 bis 4 eingegangen.

Die Vorrichtung 1 gemäß Figur 5 ist über ihren Befestigungsabschnitt 14 an einer Hauptfläche 22 einer Glasscheibe 21 befestigt und derart justiert und ausgerichtet, dass die in die erste Aufnahmevorrichtung 3 eingesetzte Injektoreinheit 4 über dem Reparaturbereich 23 mit der Schadstelle 24 positioniert ist. Ein erstes Ende der Injektoreinheit 4 liegt (mittels einer nicht dargestellten Dichtung) mit einer Andruckkraft auf dem Reparaturbereich 23 auf.

Bei aktiviertem Unwuchtmotor 7 (nicht dargestellt, vgl. Figur 3) wirkt die Injektoreinheit 4 als effektives Einkopplungselement 6 zur Einkopplung der Anregung in die Glasscheibe 21. In Figur 5 ist erkennbar, dass die erste Aufnahmevorrichtung 3 beweglich an dem Reparaturabschnitt 2 angeordnet ist, wodurch eine Ausrichtung der Injektoreinheit 4 in Bezug auf die Hauptfläche 22 der Glasscheibe 21 einstellbar ist. Dies ist insbesondere bei stark gewölbten Glasscheiben vorteilhaft, um eine gute Abdichtung des Reparaturraums 25 zu erzielen. In dem eingerahmten Ausschnitt der Figur 5 sind der Reparaturbereich 23, die Injektoreinheit 4 und die erste Sensoreinrichtung 10 vergrößert dargestellt.

Die Vorrichtung 1 umfasst eine erste Sensoreinrichtung 10 in Form eines Schwingungssensors, etwa eines Piezosensors, der an der Glasscheibe 21 am Reparaturbereich 23 angeordnet und über eine Datenverbindung 11 mit der Steuereinrichtung 16 verbunden ist. Die erste Sensoreinrichtung 10 dient der Ermittlung der durch die eingekoppelte Anregung bewirkten Schwingung der Glasscheibe.

Die erfindungsgemäße Vorrichtung 1 eignet sich in besonderer Weise zur Durchführung des einleitend beschriebenen erfindungsgemäßen Verfahrens. Das erfindungsgemäße Verfahren lässt sich jedoch grundsätzlich auch mit im Detail anders aufgebauten Vorrichtungen durchführen.

### Bezugszeichenliste

- 1: Vorrichtung
- 2: Reparaturabschnitt
- 3: erste Aufnahmevorrichtung
- 4: Injektoreinheit
- 5: Anregungsvorrichtung
- 6: Einkopplungselement
- 7: Motor mit Unwucht als Mittel zur Erzeugung einer Anregung (Teil der Anregungsvorrichtung 5)
- 8: Langloch
- 9: Strahlungsquelle
- 10: erste Sensoreinrichtung
- 11: Datenverbindung zwischen der ersten Sensoreinrichtung 10 und der Steuereinrichtung 16
- 12: zweite Sensoreinrichtung
- 13: Verformungsbereich
- 14: Befestigungsabschnitt
- 15: Befestigungsmittel (Saugnapf)
- 16: Steuereinrichtung
- 17: Kommunikationseinheit
- 18: Drehachse
- 19a: Arretierungsmittel (Drehstellung um Drehachse 18)
- 19b: Arretierungsmittel (radialer Abstand von der Drehachse 18)
- 20: Stromquelle
- 21: Glasscheibe
- 22: Hauptfläche der Glasscheibe
- 23: Reparaturbereich
- 24: Schadstelle
- 25: Reparaturraum

## Patentansprüche

1. Vorrichtung (1) zur Reparatur einer Schadstelle (24) in einem Reparaturbereich (23) einer Glasscheibe (21), umfassend einen Befestigungsabschnitt (14) zur lösbaren Befestigung der Vorrichtung (1) an einer Hauptfläche (22) der Glasscheibe (21) und einen Reparaturabschnitt (2) zur Reparatur der Glasscheibe (21), wobei die Vorrichtung (1) eine Anregungsvorrichtung (5) zur Erzeugung und Einkopplung einer periodischen mechanischen Anregung in die Glasscheibe (21) und eine Steuereinrichtung (16) zur Steuerung der Anregung umfasst, **dadurch gekennzeichnet, dass** die Vorrichtung (1) eine mit der Steuereinrichtung (16) in Datenverbindung (11) stehende erste Sensoreinrichtung (10) zur Ermittlung mindestens eines Antwortparameters einer durch die Anregung in der Glasscheibe (21), insbesondere in dem Reparaturbereich (23), bewirkten Schwingung umfasst, wobei der Antwortparameter ausgewählt ist aus der Gruppe umfassend eine Frequenz, ein Frequenzspektrum, eine Amplitude, eine Intensität und eine auf eine Phase der Anregung bezogene Phasenverschiebung.

2. Vorrichtung nach Anspruch 1, **dadurch gekennzeichnet, dass** die Steuereinrichtung (16) dazu eingerichtet ist, die Anregung hinsichtlich mindestens eines Anregungsparameters, ausgewählt aus der Gruppe umfassend eine Frequenz, ein Frequenzspektrum, eine Amplitude, eine Intensität, einen Startzeitpunkt und eine Dauer der Anregung, zu steuern.

3. Vorrichtung nach Anspruch 2, **dadurch gekennzeichnet, dass** die Steuereinrichtung (16) dazu eingerichtet ist, den mindestens einen Anregungsparameter innerhalb eines Anregungsparameterbereichs, insbesondere automatisch und/oder programmgesteuert, zu variieren.

4. Vorrichtung nach einem der vorhergehenden Ansprüche, **dadurch gekennzeichnet, dass** die Steuereinrichtung (16) dazu eingerichtet ist, die Anregung in Abhängigkeit von dem mindestens einen Antwortparameter zu steuern, insbesondere derart, dass der Antwortparameter einen in der Steuereinrichtung (16) vorgebbaren Vorgabewert erreicht oder unterschreitet oder überschreitet.

5. Vorrichtung nach einem der vorhergehenden Ansprüche, **dadurch gekennzeichnet, dass** die Steuereinrichtung (16) dazu eingerichtet ist, die Anregung in Abhängigkeit von dem mindestens einen Antwortparameter derart zu steuern, dass der mindestens eine Antwortparameter einen bezogen auf den Anregungsparameterbereich maximalen oder minimalen Wert annimmt.

6. Vorrichtung nach einem der vorhergehenden Ansprüche, **dadurch gekennzeichnet, dass** der Reparaturabschnitt (2) relativ zu dem Befestigungsabschnitt (14) um eine zu der Hauptfläche (22) der Glasscheibe (21) im Wesentlichen normale Drehachse (18) drehbar und vorzugsweise arretierbar ist.

7. Vorrichtung nach einem der vorhergehenden Ansprüche, **dadurch gekennzeichnet, dass** die Vorrichtung (1) eine Injektoreinheit (4) zur Abgabe eines Reparaturmediums auf die Schadstelle (24) umfasst.

8. Vorrichtung nach Anspruch 7, **dadurch gekennzeichnet, dass** der Reparaturabschnitt (2) eine erste Aufnahmevorrichtung (3) zur Aufnahme der Injektoreinheit (4) umfasst.

9. Vorrichtung nach Anspruch 8, **dadurch gekennzeichnet, dass** ein radialer Abstand zwischen der ersten Aufnahmevorrichtung (3) und der Drehachse (18) einstellbar ist.

10. Vorrichtung nach einem der vorhergehenden Ansprüche, **dadurch gekennzeichnet, dass** die Anregungsvorrichtung (5) ein Einkopplungselement (6) zur Einkopplung der periodischen mechanischen Anregung in die Glasscheibe (21) umfasst, wobei, bei Rückbezug zumindest auf Anspruch 7, das Einkopplungselement (6) vorzugsweise durch die Injektoreinheit (4) gebildet ist.

11. Vorrichtung nach einem der vorhergehenden Ansprüche, **dadurch gekennzeichnet, dass** die Vorrichtung (1) eine Kommunikationseinheit (17) umfasst.

12. Vorrichtung nach einem der vorhergehenden Ansprüche, **dadurch gekennzeichnet, dass** eine Strahlungsquelle (9) zur Aushärtung des Reparaturmediums an dem Reparaturabschnitt (2) angeordnet ist, insbesondere, bei Rückbezug zumindest auf Anspruch 8, an der ersten Aufnahmevorrichtung (3).

13. Vorrichtung nach einem der Ansprüche 7 bis 12, **dadurch gekennzeichnet, dass** die Vorrichtung (1) eine mit der Steuereinrichtung (16) in Datenverbindung stehende zweite Sensoreinrichtung (12) umfasst zur Ermittlung einer Andruckkraft, mit welcher die Injektoreinheit (4) auf den Reparaturbereich (23) gedrückt wird.

14. Verfahren zur Reparatur einer Schadstelle (24) in einem Reparaturbereich (23) einer Glasscheibe (21), umfassend
(a) Bereitstellung einer Reparaturvorrichtung, insbesondere einer Vorrichtung (1) nach einem der Ansprüche 1 bis 13,
(b) Anordnung der Reparaturvorrichtung an der Glasscheibe (21),
(c) Dosierung eines Reparaturmediums auf die Schadstelle (24),
(d) Aushärtung des Reparaturmediums, insbesondere unter Bestrahlung mittels einer Strahlungsquelle (9),
(e) Einkopplung einer periodischen mechanischen Anregung in die Glasscheibe (21) vor und/oder zumindest zeitweise während Schritt (c) und/oder Schritt (d),
(f) Steuerung der Anregung derart, dass vor und/oder zumindest zeitweise während Schritt (c) und/oder Schritt (d) eine Variation mindestens eines Anregungsparameters der Anregung innerhalb eines Anregungsparameterbereichs erfolgt, **dadurch gekennzeichnet, dass** das Verfahren weiterhin umfasst:
(g) Ermittlung mindestens eines Antwortparameters einer durch die Anregung in der Glasscheibe (21), insbesondere in dem Reparaturbereich (23), bewirkten Schwingung, insbesondere einer Amplitude oder einer Intensität,
(h) Steuerung der Anregung insbesondere derart, dass die Anregung während Schritt (c) und/oder Schritt (d) zumindest zeitweise, bevorzugt überwiegend, mit einem Arbeitswert des mindestens einen Anregungsparameters erfolgt, bei welchem der mindestens eine Antwortparameter einen Vorgabewert erreicht oder überschreitet oder unterschreitet oder einen bezogen auf den Anregungsparameterbereich maximalen oder minimalen Wert annimmt.

15. Verfahren nach Anspruch 14, umfassend
(i) Ermittlung einer Andruckkraft, mit welcher eine Injektoreinheit (4) der Vorrichtung (1) an die Glasscheibe (21) angedrückt wird,
(j) Vergleich der Andruckkraft mit einem Sollwert oder einem Sollwertbereich,
(k) Ausgabe eines Signals und/oder Unterbrechung oder Abbruch des Verfahrens, wenn die Andruckkraft den Sollwert unterschreitet oder überschreitet oder wenn die Andruckkraft innerhalb und/oder außerhalb des Sollwertbereichs liegt.

16. Verfahren nach einem der Ansprüche 14 oder 15, umfassend
(l) Einstellung mindestens eines Betriebsparameters der Reparaturvorrichtung, ausgewählt aus einer Gruppe umfassend
- Zeitpunkt oder Zeitpunkte für das Ein- und/oder Ausschalten der Anregungsvorrichtung (5),
- Grenzen des Anregungsparameterbereichs,
- zeitliches Verhalten der Variation des mindestens einen Anregungsparameters,
- Vorgabewert des mindestens einen Antwortparameters,
- Sollwert oder Sollwertbereich der Andruckkraft,
- Zeitpunkt oder Zeitpunkte für das Ein- und/oder Ausschalten der Strahlungsquelle (9),
mittels einer Steuereinrichtung (16) und/oder mittels einer Kommunikationseinheit (17) und/oder mittels eines mit der Reparaturvorrichtung in Datenverbindung stehenden externen Geräts.

17. Verfahren nach Anspruch 16, umfassend
(m) Abruf eines in der Reparaturvorrichtung, insbesondere in der Steuereinrichtung (16) und/oder der Kommunikationseinheit (17), und/oder in dem mit der Vorrichtung in Datenverbindung stehenden externen Gerät gespeicherten und den mindestens einen Betriebsparameter umfassenden Reparaturprogramms, insbesondere in Abhängigkeit von dem für die Reparatur vorgesehenen Reparaturmedium und/oder von der zu reparierenden Glasscheibe (21)
und/oder
(n) Steuerung derart, dass zumindest die Schritte (e) und (f) automatisiert ablaufen.

## Claims

1. A device (1) for repairing a damaged spot (24) in a repair area (23) of a glass pane (21), the device comprising an attachment portion (14) for releasable attachment of the device (1) to a main surface (22) of the glass pane (21) and a repair portion (2) for repairing the glass pane (21),
wherein the device (1) includes an excitation device (5) for producing a periodic mechanical excitation and coupling it into the glass pane (21), and a control device (16) for controlling the excitation, **characterized in that** the device (1) includes a first sensor device (10) which is in data connection (11) with the control device (16) and which is configured to determine at least one response parameter of a vibration produced by the excitation in the glass pane (21), in particular in the repair area (23), the response parameter being selected from the group including a frequency, a frequency spectrum, an amplitude, an intensity, and a phase shift relative to a phase of the excitation.

2. The device as recited in claim 1, **characterized in that** the control device (16) is configured to control the excitation with respect to at least one excitation parameter selected from the group including a frequency, a frequency spectrum, an amplitude, an intensity, a start time, and a duration of the excitation.

3. The device as recited in claim 2, **characterized in that** the control device (16) is configured to vary the at least one excitation parameter within an excitation parameter range, in particular automatically and/or in a program-controlled manner.

4. The device as recited in any of the preceding claims, **characterized in that** the control device (16) is configured to control the excitation as a function of the at least one response parameter, in particular in such a way that the response parameter reaches, or falls below or exceeds a reference value that can be specified in the control device (16).

5. The device as recited in any of the preceding claims, **characterized in that** the control device (16) is configured to control the excitation as a function of the at least one response parameter in such a way that the at least one response parameter assumes a maximum or minimum value relative to the excitation parameter range.

6. The device as recited in any of the preceding claims, **characterized in that** the repair portion (2) is rotatable relative to the attachment portion (14) about an axis of rotation (18) substantially normal to the main surface (22) of the glass pane (21) and is preferably capable of being locked in position.

7. The device as recited in any of the preceding claims, **characterized in that** the device (1) includes an injector unit (4) for releasing a repair agent onto the damaged spot (24).

8. The device as recited in claim 7, **characterized in that** the repair portion (2) includes a first holding device (3) for holding the injector unit (4).

9. The device as recited in claim 8, **characterized in that** a radial distance between the first holding device (3) and the axis of rotation (18) is adjustable.

10. The device as recited in any of the preceding claims, **characterized in that** the excitation device (5) includes an input coupling element (6) for coupling the periodic mechanical excitation into the glass pane (21), and wherein, when appendant to at least claim 7, the input coupling element (6) is preferably constituted by the injector unit (4).

11. The device as recited in any of the preceding claims, **characterized in that** the device (1) includes a communication unit (17).

12. The device as recited in any of the preceding claims, **characterized in that** a radiation source (9) for curing the repair agent is disposed on the repair portion (2), and more specifically, when appendant to at least claim 8, on the first holding device (3).

13. The device as recited in any of claims 7 through 12, **characterized in that** the device (1) includes a second sensor device (12) which is in data connection with the control device (16) and used to determine a contact pressure with which the injector unit (4) is pressed onto the repair area (23).

14. A method for repairing a damaged spot (24) in a repair area (23) of a glass pane (21), the method comprising:
(a) providing a repair device, in particular a device (1) according to any of claims 1 through 13,
(b) positioning the repair device on the glass pane (21),
(c) dispensing a repair agent onto the damaged spot (24),
(d) curing the repair agent, in particular under irradiation by a radiation source (9),
(e) coupling a periodic mechanical excitation into the glass pane (21) before and/or at least temporarily during the step (c) and/or the step (d),
(f) controlling the excitation in such a way that at least one excitation parameter of the excitation is varied within an excitation parameter range before and/or at least temporarily during the step (c) and/or the step (d),
**characterized in that** the method further comprises:
(g) determining at least one response parameter, in particular an amplitude or an intensity, of a vibration produced by the excitation in the glass pane (21), in particular in the repair area (23),
(h) controlling the excitation in particular in such a way that during the step (c) and/or the step (d), the excitation is at least temporarily, preferably predominantly, performed with an operational value of the at least one excitation parameter at which the at least one response parameter reaches, or exceeds or falls below a reference value, or assumes a maximum or minimum value relative to the excitation parameter range.

15. The method as recited in claim 14, comprising:
(i) determining a contact pressure with which an injector unit (4) of the device (1) is pressed against the glass pane (21),
(j) comparing the contact pressure to a setpoint value or a setpoint range,
(k) outputting a signal and/or interrupting or aborting the method when the contact pressure falls below or exceeds the setpoint value or when the contact pressure lies within and/or outside the setpoint range.

16. The method as recited in any of claims 14 or 15, comprising:
(l) setting at least one operating parameter of the repair device, the at least one operating parameter being selected from a group including
- point or points in time for switching the excitation device (5) on and/or off,
- limits of the excitation parameter range,
- temporal behavior of the variation of the at least one excitation parameter,
- reference value of the at least one response parameter,
- setpoint value or setpoint range of the contact pressure
- point or points in time for switching the radiation source (9) on and/or off,
by means of a control device (16) and/or by means of a communication unit (17) and/or by means of an external device which is in data connection with the repair device.

17. The method as recited in claim 16, comprising:
(m) retrieving a repair program which is stored in the repair device, in particular in the control device (16) and/or the communication unit (17), and/or in the external device which is in data connection with the device, and which repair program includes the at least one operating parameter, the retrieval being performed in particular as a function of the repair agent intended for the repair and/or of the glass pane (21) to be repaired and/or
(n) performing control in such a way that at least the steps (e) and (f) are executed in an automated manner.

## Revendications

1. Dispositif (1) de réparation d'un endroit endommagé (24) dans une zone de réparation (23) d'une vitre (21), ledit dispositif comprenant une portion de fixation (14) destinée à fixer de manière amovible le dispositif (1) à une surface principale (22) de la vitre (21) et une portion de réparation (2) destinée à réparer la vitre (21), le dispositif (1) comprenant un dispositif d'excitation (5) destiné à générer une excitation mécanique périodique et l'injecter par couplage dans la vitre (21) et un module de commande (16) destiné à commander l'excitation, **caractérisé en ce que** le dispositif (1) comprend un premier module de détection (10) relié par une liaison de données (11) au module de commande (16) et destiné à déterminer au moins un paramètre de réponse d'une vibration provoquée par l'excitation dans la vitre (21), en particulier dans la zone de réparation (23), le paramètre de réponse étant sélectionné dans le groupe comprenant une fréquence, un spectre de fréquences, une amplitude, une intensité et un déphasage lié à une phase de l'excitation.

2. Dispositif selon la revendication 1, **caractérisé en ce que** le module de commande (16) est conçu pour commander l'excitation en termes d'au moins un paramètre d'excitation choisi dans le groupe comprenant une fréquence, un spectre de fréquences, une amplitude, une intensité, un instant de début et une durée de l'excitation.

3. Dispositif selon la revendication 2, **caractérisé en ce que** le module de commande (16) est conçu pour faire varier l'au moins un paramètre d'excitation dans une plage de paramètres d'excitation, notamment de manière automatique et/ou programmée.

4. Dispositif selon l'une des revendications précédentes, **caractérisé en ce que** le module de commande (16) est conçu pour commander l'excitation en fonction de l'au moins un paramètre de réponse, notamment de manière à ce que le paramètre de réponse atteigne une valeur par défaut qui peut être spécifiée dans le module de commande (16) ou devienne inférieur ou supérieur à celle-ci.

5. Dispositif selon l'une des revendications précédentes, **caractérisé en ce que** le module de commande (16) est conçu pour commander l'excitation en fonction de l'au moins un paramètre de réponse de manière à ce que l'au moins un paramètre de réponse prenne une valeur maximale ou minimale en fonction de la plage de paramètres d'excitation.

6. Dispositif selon l'une des revendications précédentes, **caractérisé en ce que** la portion de réparation (2) peut être mise en rotation, et de préférence arrêtée, par rapport à la portion de fixation (14) sur un axe de rotation (18) qui est sensiblement normal à la surface principale (22) de la vitre (21).

7. Dispositif selon l'une des revendications précédentes, **caractérisé en ce que** le dispositif (1) comprend une unité d'injection (4) destinée à délivrer un milieu de réparation à l'endroit endommagé (24).

8. Dispositif selon la revendication 7, **caractérisé en ce que** la portion de réparation (2) comprend un premier dispositif de réception (3) destiné à recevoir l'unité d'injection (4).

9. Dispositif selon la revendication 8, **caractérisé en ce qu'**une distance radiale entre le premier dispositif de réception (3) et l'axe de rotation (18) est réglable.

10. Dispositif selon l'une des revendications précédentes, **caractérisé en ce que** le dispositif d'excitation (5) comprend un élément d'injection par couplage (6) destiné à injecter par couplage l'excitation mécanique périodique dans la vitre (21), par référence au moins à la revendication 7, l'élément d'injection par couplage (6) étant de préférence formé par l'unité d'injection (4).

11. Dispositif selon l'une des revendications précédentes, **caractérisé en ce que** le dispositif (1) comprend une unité de communication (17).

12. Dispositif selon l'une des revendications précédentes, **caractérisé en ce qu'**une source de rayonnement (9) destinée à durcir le milieu de réparation est disposée au niveau de la portion de réparation (2), en particulier, par référence au moins à la revendication 8, au niveau du premier dispositif de réception (3).

13. Dispositif selon l'une des revendications 7 à 12, **caractérisé en ce que** le dispositif (1) comprend un deuxième module de détection (12) relié par une liaison de données au module de commande (16) et destiné à déterminer une force de pression avec laquelle l'unité d'injection (4) est pressée sur la zone de réparation (23) .

14. Procédé de réparation d'un endroit endommagé (24) dans une zone de réparation (23) d'une vitre (21), ldit procédé comprenant les étapes suivantes
(a) fournir un dispositif de réparation, en particulier un dispositif (1) selon l'une des revendications 1 à 13,
(b) disposer le dispositif de réparation sur la vitre (21),
(c) doser un milieu de réparation sur l'endroit endommagé (24),
(d) faire durcir le milieu de réparation, en particulier par irradiation au moyen d'une source de rayonnement (9),
(e) injecter par couplage une excitation mécanique périodique dans la vitre (21) avant et/ou au moins temporairement pendant l'étape (c) et/ou l'étape (d),
(f) commander l'excitation de manière à ce que, avant et/ou au moins temporairement pendant l'étape (c) et/ou l'étape (d), une variation d'au moins un paramètre d'excitation de l'excitation soit effectuée dans une plage de paramètres d'excitation, **caractérisé en ce que** le procédé comprend en outre les étapes suivantes :
(g) déterminer au moins un paramètre de réponse d'une vibration, notamment d'une amplitude ou d'une intensité, provoquée par l'excitation dans la vitre (21), en particulier dans la zone de réparation (23),
(h) commander l'excitation notamment de manière à ce que l'excitation pendant l'étape (c) et/ou l'étape (d) soit effectuée au moins temporairement, de préférence principalement, avec une valeur de travail de l'au moins un paramètre d'excitation pour lequel l'au moins un paramètre de réponse atteigne une valeur par défaut ou devienne supérieure ou inférieure à celle-ci ou prenne une valeur maximale ou minimale sur la base de la plage de paramètres d'excitation.

15. Procédé selon la revendication 14 comprenant les étapes suivantes
(i) déterminer une force de pression avec laquelle une unité d'injection (4) du dispositif (1) est pressée contre la vitre (21),
(j) comparer la force de pression à une valeur cible ou une plage de valeurs cible,
(k) délivrer un signal et/ou une Interruption ou un abandon du procédé si la force de pression devient inférieure ou supérieure à la valeur cible ou si la force de pression est située à l'intérieur et/ou à l'extérieur de la plage de valeurs cibles.

16. Procédé selon l'une des revendications 14 ou 15, comprenant les étapes suivantes
(l) régler au moins un paramètre de fonctionnement du dispositif de réparation choisi dans un groupe comprenant
- l'instant ou des instants d'activation et/ou de désactivation du dispositif d'excitation (5),
- des limites de la plage de paramètres d'excitation,
- variation dans le temps de l'au moins un paramètre d'excitation,
- valeur par défaut de l'au moins un paramètre de réponse,
- valeur cible ou plage de valeurs cibles de la force de pression,
- l'instant ou des instants d'activation et/ou de désactivation de la source de rayonnement (9),
au moyen d'un module de commande (16) et/ou au moyen d'une unité de communication (17) et/ou au moyen d'un appareil extérieur relié par une liaison de données au dispositif de réparation.

17. Procédé selon la revendication 16, comprenant les étapes suivantes
(m) faire appel à un programme de réparation, notamment qui est mémorisé dans le module de commande (16) et/ou l'unité de communication (17) et/ou dans l'appareil extérieur relié par une liaison de données au dispositif et qui comprend l'au moins un paramètre de fonctionnement, notamment en fonction du milieu de réparation prévu pour la réparation et/ou de la vitre (21) à réparer
et/ou
(n) commander de manière à ce qu'au moins les étapes (e) et (f) se déroulent automatiquement.
